# EUROPEAN PATENT APPLICATION

(11) **EP 4 074 581 A1**
(43) Date of publication of application: **19.10.2022**
(21) Application number: 21168437.8
(22) Date of filing: 14.04.2021
(51) Int. Cl.: B62D 15/02, G05D 1/00, G06K 9/00

(54) **A METHOD FOR GENERATING A MAP OF AN AREA TO BE USED FOR GUIDING A VEHICLE**

(71) Applicant: VOLVO TRUCK CORPORATION, 405 08 Göteborg (SE)
(72) Inventor: PERSSON, Daniel, 413 21 Göteborg (SE)
(74) Representative: Valea AB

(57) **Abstract**

The invention relates to a method for generating a map of an area (A) to be used for guiding a vehicle (1) in the area by use of at least one vehicle guiding sensor (2, 3), the method comprising:
- obtaining (S1) sensor accuracy data comprising information about vehicle guiding sensor accuracy problems which are associated with at least one vehicle position of a vehicle when the vehicle is guided in the area;
- based on the obtained sensor accuracy data, defining (S2) one or more low sensor accuracy zones (Z₁, Z₂, Z₃) relating to the vehicle position/s at which the vehicle guiding sensor accuracy problems were recognized; and
- generating (S3) the map based on the defined one or more low sensor accuracy zones (Z₁, Z₂, Z₃).

## Description

### TECHNICAL FIELD

The invention relates to a method for generating a map of an area to be used for guiding a vehicle in the area by use of at least one vehicle guiding sensor. The invention also relates to a control unit, a method for guiding a vehicle in an area, a vehicle, a computer program and to a computer readable medium.

The invention can be applied in heavy-duty vehicles, such as trucks, buses and construction equipment. Although the invention will be described with respect to a heavy-duty truck, the invention is not restricted to this particular vehicle, but may also be used in other vehicles such as other trucks, buses, construction equipment, passenger cars etc.

### BACKGROUND

Advanced driver assistance systems (ADAS) for vehicles are used for supporting a driver to perform certain driving manoeuvres, such as reversing or parking a vehicle. For example, the driver may control gear, gas and brake, while the system supports in guiding the vehicle along a travelling path. There are also more advanced vehicle driving systems which are fully automatic where no driver is required, i.e. the system controls the movement of the vehicle without any human involvement.

The above-mentioned systems have for example shown to be very useful for reversing a vehicle combination, such as a truck and trailer combination. More specifically, vehicle combinations, in particular heavy-duty truck and trailer combinations, are generally hard to manoeuvre for a driver during reversing. Thereby, an ADAS system may at least support the driver during reversing by automatically steering the vehicle or by providing steering instructions to the driver. In addition, the systems have also shown to be very useful for manoeuvring a vehicle combination in narrow areas, such as in terminal areas, close to buildings etc.

The systems utilize vehicle guiding sensors for the manoeuvring operation. The vehicle guiding sensors may for example be sensors for identifying objects, sensors for determining the vehicle's global position and sensors for determining a vehicle state, such as a relative orientation between connected vehicle bodies of a vehicle combination. For example, the vehicle guiding sensors may be any one or a combination of GNSS (global navigation satellite system) positioning sensors, environmental perception sensors, including but not limited to LIDAR (light detection and ranging), RADAR (radio detection and ranging), SONAR (sound navigation and ranging), camera and ultrasonic sensors, and articulation angle sensors for determining an articulation angle between two connected vehicle bodies.

The vehicle guiding sensors may not always perform sufficiently during vehicle guiding. Therefore, it has been realized that there is a need to develop further improved technology for guiding a vehicle.

### SUMMARY

In view of the above, an object of the invention is to provide a method for generating a map of an area to be used for guiding a vehicle in the area by use of at least one vehicle guiding sensor, which results in improved vehicle guiding in the area. Further objects of the invention are to provide an improved control unit for generating a map of an area to be used for guiding a vehicle in the area by use of at least one vehicle guiding sensor, an improved method for guiding a vehicle in an area, a control unit for guiding a vehicle in an area, a vehicle, a computer program and/or a computer readable medium.

According to a first aspect of the invention, the object is achieved by a method according to claim 1. According to a second aspect of the invention, the object is achieved by a control unit according to claim 9. According to a third aspect of the invention, the object is achieved by a method according to claim 10. According to a fourth aspect of the invention, the object is achieved by a control unit according to claim 11. According to a fifth aspect of the invention, the object is achieved by a vehicle according to claim 12. According to a sixth aspect of the invention, the object is achieved by a computer program according to claim 14. According to a seventh aspect of the invention, the object is achieved by a computer readable medium according to claim 15.

Thus, according to the first aspect, the object is achieved by a method for generating a map of an area to be used for guiding a vehicle in the area by use of at least one vehicle guiding sensor. The method comprises:
- obtaining sensor accuracy data comprising information about vehicle guiding sensor accuracy problems which are associated with at least one vehicle position of a vehicle when the vehicle is guided in the area;
- based on the obtained sensor accuracy data, defining one or more low sensor accuracy zones relating to the vehicle position/s at which the vehicle guiding sensor accuracy problems were recognized; and
- generating the map based on the defined one or more low sensor accuracy zones.

By the provision of a method according to the first aspect of the invention, a map of an area can be generated, which map may be used to improve vehicle guiding in the area. More specifically, it has been realized that in certain areas, and/or during certain conditions, vehicle guiding sensors may occasionally not perform sufficiently in order to provide reliable output for the vehicle guiding. In particular, it has been realized that specific vehicle positions in an area may result in reduced vehicle guiding sensor performance. Therefore, by generating a map as disclosed herein, the map can be used for improving the vehicle guiding. For example, by use of the generated map, certain zones in an area may be avoided, a warning signal may be issued when entering a zone where a vehicle guiding sensor is not working properly, and an area may even be redesigned in order to avoid sensor accuracy problems.

A *"map"* as used herein should be interpreted broadly and may be defined as data of an area which are associated with positions in the area. The map of the area is preferably a map for a computer, i.e. it may not necessarily be configured as a visual representation of the area but may rather be in the form of data which are at least associated with positions in the area.

A *"vehicle guiding sensor accuracy problem"* as used herein means when a vehicle guiding sensor experiences a performance reduction in its measurement accuracy, which performance reduction will negatively affect the vehicle guiding. Negatively affect vehicle guiding may be that the vehicle during the guiding deviates from an intended travelling path to a specific degree and/or that the vehicle guiding cannot be performed at all.

Optionally, the information about vehicle guiding sensor accuracy problems may further be associated with at least one of a vehicle state, an environmental condition and a time of day when the vehicle is guided in the area. Thereby an improved map may be generated, containing more information which is associated with one or more positions in the area and to a vehicle guiding sensor problem. For example, a vehicle state may be an orientation of a vehicle in the area, such as an orientation of a rearward facing surface of the vehicle. Other non-limiting examples of a vehicle state may be vehicle speed, a vehicle mission and a vehicle control state, e.g. if the vehicle is automatically controlled or to at least some extent controlled by a driver during guiding. An environmental condition may e.g. be a weather condition, such as if it is raining or not, an ambient light condition and if there is snow and/or ice on the ground surface, etc. An environmental condition may be defined as any environmental condition which may affect vehicle guiding sensor performance. The time of day may for example be associated with a position of the sun, which for example may negatively affect the performance of the vehicle guiding sensor.

Optionally, the sensor accuracy data may be obtained from on-board vehicle guiding sensors of a plurality of vehicles which are guided in the area. Thereby, more possible vehicle guiding sensor problems may be identified, since different vehicles may e.g. experience different problems. Still optionally, the sensor accuracy data may be obtained from at least one off-board vehicle guiding sensor. It has namely been realized that vehicle guiding may alternatively, or additionally, be performed by one or more off-board sensors. By identifying sensor accuracy problems of such sensors, an improved map may be generated, which also can be used when guiding a vehicle by one or more off-board vehicle guiding sensors.

Optionally, at least one of the one or more low sensor accuracy zones may be defined by determining at least one entry point for the low sensor accuracy zone, which at least one entry point defines a limit between the low sensor accuracy zone and a high sensor accuracy zone outside of the low sensor accuracy zone. According to an example embodiment, the at least one low sensor accuracy zone may be defined by determining more than one such entry point for the low sensor accuracy zone. Purely by way of example, the at least one low sensor accuracy zone may be defined by interpolating between the more than one entry points, thereby defining a border for the low sensor accuracy zone.

Optionally, the map may further be generated by defining at least one high sensor accuracy zone outside of the one or more low sensor accuracy zones. A high sensor accuracy zone may herein be defined as a zone where sensor accuracy performance is good enough for reliably performing vehicle guiding, such as a zone where no vehicle guiding sensor accuracy problems were recognized.

Optionally, the sensor accuracy data may relate to at least one of GNSS data accuracy problems, articulation angle measurement problems and environmental perception sensor problems. It has namely been realized that the aforementioned sensors may at specific positions in an area and/or at specific conditions experience a performance reduction which may compromise vehicle guiding. Thereby, by obtaining sensor accuracy data of such sensors and generating a map based on this information, improved vehicle guiding can be achieved. In particular, the generated map can be used for guiding a vehicle in the area. Purely by way of example, a GNSS vehicle guiding sensor may experience a problem, i.e. a performance reduction in its measurement accuracy, which may negatively affect vehicle guiding. The problem may for example be that the obtained position information at certain positions in the area fluctuates too much, i.e. it is not reliable, or that no reliable position information is obtained at all. As another example, an articulation angle measurement sensor may also experience problems. For example, a camera, LIDAR, RADAR, SONAR and/or ultrasonic sensor may be used for the articulation angle measurement. If for example a camera is used for the articulation angle measurement, it may at certain positions in the area be obstructed by sun glare, thereby reducing its performance.

Optionally, the one or more low sensor accuracy zones may be associated with a specific type of vehicle guiding sensor which experienced the sensor accuracy problems. Thereby, when a vehicle is guided by use of a similar type of sensor, a warning signal may be issued when entering or approaching the low sensor accuracy zone which is associated with the same type of vehicle guiding sensor. Still optionally, the one or more low sensor accuracy zones may be associated with a specific mounting position and/or orientation of a vehicle guiding sensor which experienced the sensor accuracy problems. Thereby, when a vehicle is guided by use of a vehicle guiding sensor which is mounted at a similar position and/or oriented in a similar manner, a warning signal may be issued when entering or approaching the low sensor accuracy zone which is associated with the vehicle guiding sensor with the specific mounting position.

Optionally, the vehicle guiding sensor accuracy problems may be defined by at least one predetermined threshold value. As such, a vehicle guiding sensor accuracy problem, i.e. a performance reduction in the sensor's measurement accuracy which negatively affects vehicle guiding, may be determined more easily, implying reduced computational effort and cost-efficiency. Accordingly, when the at least one predetermined threshold is reached or exceeded during vehicle guiding, it can be determined that a vehicle guiding sensor accuracy problem has occurred. Vehicle guiding sensor accuracy problems may for example be determined by recognizing that a vehicle guiding operation was not successful, and/or deviated too much from an intended travelling path. Additionally, or alternatively, vehicle guiding sensor accuracy problems may for example be determined by recognizing that GNSS position values fluctuates too much, as mentioned in the above. Still further, vehicle guiding sensor accuracy problems may for example be determined by recognizing that an articulation angle measurement sensor cannot obtain an articulation angle value at specific vehicle positions during vehicle guiding.

According to the second aspect of the invention, the object is achieved by a control unit for generating a map of an area to be used for guiding a vehicle in the area by use of at least one vehicle guiding sensor, wherein the control unit is configured to perform the steps of the method according to any one of the embodiments of the first aspect of the invention. Advantages and effects of the second aspect are largely analogous to the advantages and effects of the first aspect, and vice versa. The control unit may be any type of control unit, i.e. it may be an electronic control unit, which is provided on-board a vehicle and/or off-board a vehicle. The control unit may be constituted by one or more connected sub-control units. The control unit preferably comprises hardware, or hardware and software for performing the method. Accordingly, the control unit preferably comprises processing circuitry and one or more memories for storing code, i.e. instructions in the form of a software. The control unit may be denoted a computer. The generated map may be stored in a memory, such as an on-board or off-board memory, including but not limited to a cloud memory.

According to the third aspect of the invention, the object is achieved by a method for guiding a vehicle in an area, comprising:
- guiding the vehicle in the area by use of a map generated according to any one of the embodiments of the first aspect of the invention, and
- issuing a warning signal when the vehicle is entering or approaching at least one of the one or more low sensor accuracy zones.

Thereby, improved guiding of the vehicle is achieved. In particular, it has been realized that it is advantageous to issue a warning signal when the vehicle is entering or approaching a low sensor accuracy zone. The warning signal may for example be issued to a driver of the vehicle, via e.g. a human machine interface (HMI). Such a warning signal may be any one or a combination of an audio signal, a visual signal and a haptic signal. When prompted by said signal, the driver may for example take over control of the vehicle in the low sensor accuracy zone, partially or completely. A driver as mentioned herein may not necessarily be an on-board driver but may also be a person located remotely from the vehicle, i.e. an off-board driver. Additionally, or alternatively, the warning signal may be provided to any system, such as to a control unit or the like, and be used for taking an appropriate action. For example, an action may be to switch from using a vehicle guiding sensor which is experiencing accuracy problems in a certain zone of the area to another sensor which is not experiencing accuracy problems in that zone. Purely by way of example, a first vehicle guiding sensor may experience accuracy problems in a zone whilst a second different vehicle guiding sensor is not experiencing accuracy problems in the same zone, or vice versa. Thereby, by e.g. switching from using the first vehicle guiding sensor to instead using the second different vehicle guiding sensor in that zone, improved vehicle guiding can be achieved. The first vehicle guiding sensor and the second different vehicle guiding sensor may in an embodiment be denoted a first type of vehicle guiding sensor and a second different type of vehicle guiding sensor. As another example, an appropriate action may be to replan the intended travelling path, e.g. to try to avoid a low sensor accuracy zone.

According to the fourth aspect of the invention, the object is achieved by a control unit for guiding a vehicle in an area, wherein the control unit is configured to perform the steps of the method according to any one of the embodiments of the third aspect. Advantages and effects of the fourth aspect are largely analogous to the advantages and effects of the third aspect, and vice versa. The control unit may be of similar type as the control unit of the second aspect of the invention, or it may even be the same control unit, implying a cost-efficient configuration.

According to the fifth aspect of the invention, the object is achieved by a vehicle, wherein the vehicle is configured to be guided by use of the control unit according to any one of the embodiments of the fourth aspect and by at least one vehicle guiding sensor. Advantages and effects of the fifth aspect are largely analogous to the advantages and effects of the third and fourth aspects, and vice versa.

Optionally, the vehicle may be an articulated vehicle combination comprising at least one articulation joint. For example, the articulated vehicle combination may be a truck and trailer combination, such as a semi-trailer combination and a so-called Nordic combination comprising more than one articulation joint. It has been realized that articulated vehicle combinations are more dependent on reliable and accurate sensor data for vehicle guiding, since any sensor accuracy problem may result in larger deviations from an intended travelling path for such vehicles. This is especially the case when reversing an articulated vehicle combination, where only small deviations of the articulation angle(s) may result in large deviations from the intended travelling path. Thereby, by using a map as generated herein for the vehicle guiding of such a vehicle, deviations from the travelling path during reversing can be avoided, or at least reduced.

According to the sixth aspect of the invention, the object is achieved by a computer program comprising instructions for causing the control unit of the second aspect to perform the steps of the method according to any one of embodiments of the first aspect, and/or for causing the control unit of the fourth aspect to perform the steps of the method according to any one of the embodiments of the third aspect.

According to the seventh aspect, the object is achieved by a computer readable medium comprising instructions for causing the control unit of the second aspect to perform the steps of the method according to any one of the embodiments of the first aspect, and/or for causing the control unit of the fourth aspect to perform the steps of the method according to any one of the embodiments of the third aspect.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle according to an embodiment of the invention;
Fig. 2 is a flowchart of a method according to an embodiment of the first aspect of the invention;
Fig. 3 is a schematic view of an area comprising low sensor accuracy zones; and
Fig. 4 is a flowchart of a method according to an embodiment of the third aspect of the invention.

### DETAILED DESCRIPTION OF EXAMPLE EMBODIMENTS OF THE INVENTION

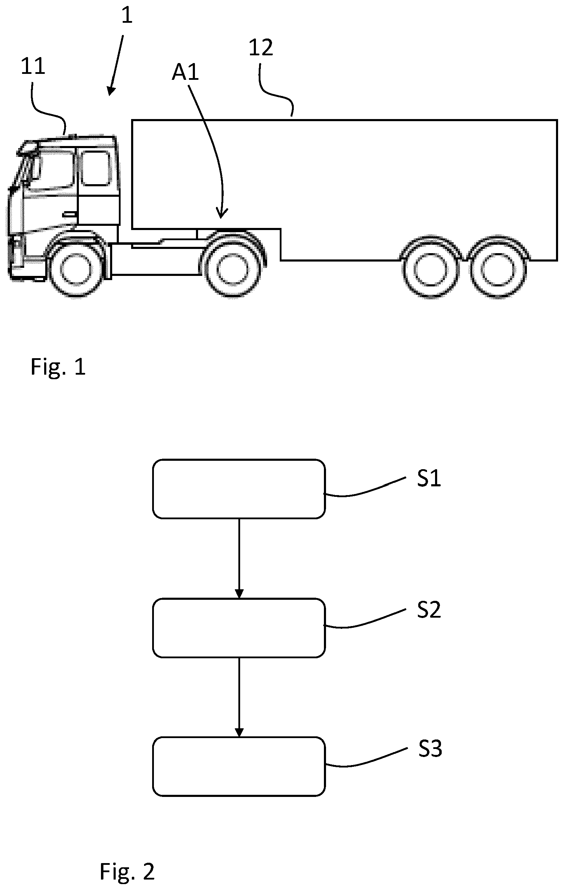

Fig. 1 depicts a side view of a vehicle 1 in the form of heavy-duty truck and trailer combination. Accordingly, the vehicle 1 is here an articulated vehicle combination, and comprises a truck 11 and a trailer 12, which here is a so-called semi-trailer. The articulated vehicle combination 1 comprises an articulation joint A1. The vehicle 1 may use a map as will be described in the below, and/or the vehicle 1 may be used for generating such a map. The articulated vehicle combination 1 may further comprise at least one on-board vehicle guiding sensor (not shown) for guiding the vehicle combination 1. Additionally, or alternatively, the vehicle combination 1 may be guided by one or more off-board vehicle guiding sensors (not shown).

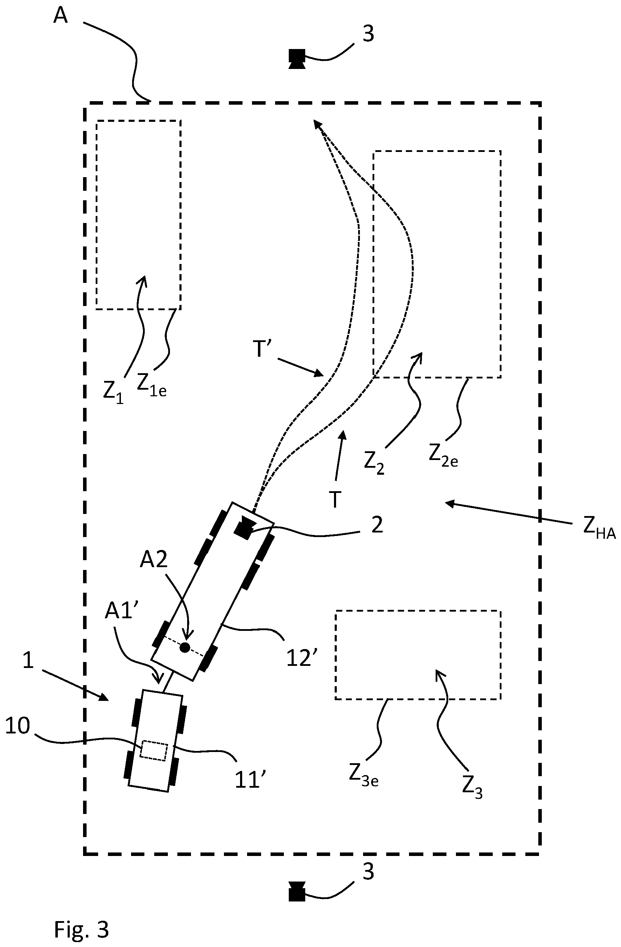

Fig. 3 shows a schematic view from above of an area A in which a vehicle 1 is to be guided by use of one or more vehicle guiding sensors 2, 3. The vehicle 1 as shown in fig. 3 is also here an articulated vehicle combination and comprises a truck 11' and a trailer 12'. This vehicle 1 comprises a first and a second articulation joint A1', A2, and may be denoted a Nordic combination. The vehicle, in this case the truck 11', comprises a control unit 10. The vehicle guiding sensor 2 is an on-board camera which is mounted at a rearward facing surface of the trailer 12'. A vehicle guiding sensor, such as the camera 2, may additionally or alternatively be mounted on the truck 11'. The vehicle guiding sensors 3 are off-board cameras which are directed so that they can observe at least parts of the area A. The vehicle 1 may comprise further vehicle guiding sensors, such as the above-mentioned GNSS sensor and articulation angle measurement sensors (not shown).

With reference to especially fig. 2 and fig. 3, a method according to example embodiments of the first aspect of the invention will be described.

The method according to the first aspect is a method for generating a map of an area A to be used for guiding a vehicle 1 in the area A by use of at least one vehicle guiding sensor 2, 3. The method comprises:
S1: obtaining sensor accuracy data comprising information about vehicle guiding sensor accuracy problems which are associated with at least one vehicle position of a vehicle 1 when the vehicle 1 is guided in the area A. For example, when the vehicle 1 is guided in the area A along a travelling path T by use of e.g. the vehicle guiding sensor 2, the vehicle 1 may experience a sensor accuracy problem for the vehicle guiding sensor 2 when entering a zone Z₂. The sensor accuracy problem may for example be that the camera 2 is obstructed by sun glare in the zone Z₂. A vehicle position may for example be defined by coordinates in a coordinate system.

The method further comprises:
S2: based on the obtained sensor accuracy data, defining one or more low sensor accuracy zones Z₁, Z₂, Z₃ relating to the vehicle position/s at which the vehicle guiding sensor accuracy problems were recognized; and
S3: generating the map based on the defined one or more low sensor accuracy zones Z₁, Z₂, Z₃.

Accordingly, when e.g. the vehicle 1, or any other vehicle (not shown), is guided in the area A, it may experience sensor accuracy problems of one or more vehicle guiding sensors, which problems are associated with a position of the vehicle in the area A. This data is then used for defining one or more low sensor accuracy zones Z₁, Z₂, Z₃ which relate to the vehicle positions at which the vehicle guiding sensor accuracy problems were recognized. For example, in addition to the above problem related to zone Z₂, the zones Z₁ and Z₃ may relate to GNSS sensor accuracy problems, e.g. in these zones the position information fluctuates too much, or no position information is obtained at all. The fluctuations may reach or exceed a predetermined threshold value, above which threshold value the fluctuations will negatively affect the vehicle guiding.

The information about vehicle guiding sensor accuracy problems for any one of the zones Z₁, Z₂, Z₃ may further be associated with at least one of a vehicle state, an environmental condition and a time of day when the vehicle is guided in the area A. For example, the above-mentioned sun glare in zone Z₂ may be experienced at a specific time of day and/or during specific weather conditions, e.g. during daytime a sunny day. In addition, the sun glare for e.g. the camera 2 may only be related to a specific orientation of the vehicle 1, i.e. at a specific vehicle state. Thereby, by also associating this information with the vehicle positions, a further improved map may be generated. In particular, when guiding a vehicle 1 by use of the generated map along e.g. the travelling path T, it can be determined in advance if, when and where a sensor accuracy problem may occur for e.g. the vehicle guiding sensor 2. Accordingly, this information can be used for recognizing sensor accuracy problems for any vehicle guiding sensor. Thereby, the generated map may be used for guiding a vehicle 1 by similar and/or by the same type of vehicle guiding sensors which are associated with the generated map. According to an example embodiment, the vehicle 1 which is guided by use of the map comprises at least one vehicle guiding sensor which is of the same type, or of a similar type, and which also is mounted at the same, or at a similar, position, as the vehicle guiding sensor(s) which experienced the sensor accuracy problem when the map was generated.

The sensor accuracy data may be obtained from on-board vehicle guiding sensors 2 of for example a plurality of vehicles which are guided in the area A, and/or the sensor accuracy data may be obtained from at least one off-board vehicle guiding sensor 3 when one or more vehicles are guided in the area A. As such, by recording sensor accuracy data - by the aforementioned vehicle guiding sensors 2, 3, and/or by any other vehicle guiding sensors - when several vehicles are guided in the area A, a more reliable map can be generated.

Furthermore, at least one of the one or more low sensor accuracy zones Z₁, Z₂, Z₃ may be defined by determining at least one entry point Z₁ₑ, Z₂ₑ, Z₃ₑ for the low sensor accuracy zone, which at least one entry point Z₁ₑ, Z₂ₑ, Z₃ₑ defines a limit between the low sensor accuracy zone Z₁, Z₂, Z₃ and a high sensor accuracy zone Z_{HA} outside of the low sensor accuracy zone Z₁, Z₂, Z₃. In the fig. 3 embodiment the entry point of each zone is at least one point on the dashed line enclosing each one of the zones Z₁, Z₂, Z₃. The dashed line for each zone Z₁, Z₂, Z₃ is preferably defined by several entry points, whereby the border of each zone Z₁, Z₂, Z₃ may e.g. be created/defined by interpolating between the determined entry points. It shall be understood that even though a visual representation of the area A and of its sensor accuracy zones Z₁, Z₂, Z₃ is shown in fig. 3, the generated map may rather only be configured as data for a computer, such as for any one of the control units disclosed herein. By recording sensor accuracy data from more than one vehicle and/or during more than one occasion, the confidence of the actual position of the entry point(s) Z₁ₑ, Z₂ₑ, Z₃ₑ can be increased.

The map may further be generated by defining at least one high sensor accuracy zone Z_{HA} outside of the one or more low sensor accuracy zones Z₁, Z₂, Z₃. This zone may for example be defined by subtracting the zones Z₁, Z₂, Z₃ from the area A.

The area A may be any type of area, including but not limited to a terminal area, a harbour, a confined area, a street, a part of a city or the like.

The sensor accuracy data may as mentioned relate to at least one of GNSS (Global Navigation Satellite System) data accuracy problems, articulation angle measurement problems and environmental perception sensor problems. An environmental perception sensor may for example be a LIDAR, RADAR, SONAR, camera, and/or ultrasonic sensor.

The vehicle guiding sensor accuracy problems may be defined by at least one predetermined threshold value, as mentioned in the above. For example, a predetermined threshold value for a GNSS sensor, a LIDAR sensor or for any other vehicle guiding sensor may be determined, which value is indicative of a sensor accuracy problem.

When e.g. a camera or the like is used for determining an articulation angle of an articulated vehicle combination 1, the articulation angle may be determined by matching an image obtained by the camera with a stored image. The stored image may have been obtained during a calibration operation for the camera. If there is a difficulty in finding a match, this may be an indication of a sensor accuracy problem. For example, sun glare may result in that the obtained image cannot find a match with a stored image from the calibration operation.

Other non-limiting examples of sensor accuracy problems which may be identified and used for defining the low sensor accuracy zones Z₁, Z₂, Z₃ are:
- GNSS triangulation errors which exceed a predetermined threshold value,
- GNSS position and/or heading which fluctuates,
- number of available GNSS satellites is suddenly decreasing, and
- articulation angle value which fluctuates.

A control unit 10 of e.g. the vehicle 1 may be used for generating the map of the area A. It shall however be understood that the control unit may be any type of control unit, also including off-board control units or computers.

The generated map may be generated over time by one or more vehicles which are guided in the area A. Thereby the map may also be updated over time, taking e.g. new circumstances into consideration. For example, a GNSS problem may occur after a new building has been built in the area A, and by continually updating the map, such modifications to the area A may be considered and included in the updated map.

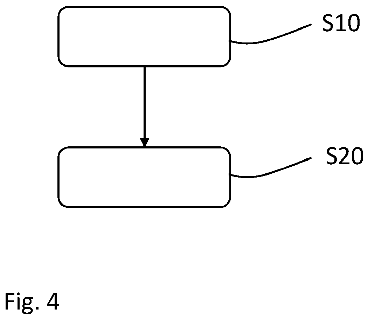

With reference to fig. 3 and fig. 4, a method for guiding a vehicle 1 in an area A according to the third aspect will be described. The method comprises:
S10: guiding the vehicle 1 in the area A by use of a map generated according to any one of the embodiments of the first aspect of the invention, and
S20: issuing a warning signal when the vehicle 1 is entering or approaching at least one of the one or more low sensor accuracy zones Z₁, Z₂, Z₃.

For example, as shown in fig. 3, the travelling path T which the vehicle 1 is guided along is at least partly provided in the low sensor accuracy zone Z₂. Thereby, a driver of the truck 11' may be notified by the warning signal that the vehicle 1 during the vehicle guiding will enter into the zone Z₂. Thereby, appropriate actions may be taken by the driver, such as taking over and manually controlling the vehicle 1 in the zone Z₂, and/or avoiding entering the zone Z₂. In the shown embodiment the vehicle 1 is reversing along the travelling path T. Additionally, or alternatively, the warning signal may be used for e.g. the control unit 10, or any other control unit, taking an appropriate action. For example, it may be recognized that a similar sensor as the vehicle guiding sensor 2 has experienced problems in the zone Z₂. Thereby, an appropriate action may be to instead use another sensor, such as the vehicle guiding sensors 3, for the vehicle guiding. Another appropriate action may be to replan the travelling path T to a travelling path T' such that the zone Z₂ is avoided, or at least partially avoided.

The vehicle guiding sensors 3 are preferably connected to a control unit (not shown), or computer, which in turn is communicatively connected with e.g. the control unit 10 of the vehicle 1. The communication is in such an embodiment preferably wireless, such as via WiFi, Bluetooth, 3g, 4g, 5g or the like.

The control unit 10 is preferably performing the vehicle guiding method according to the third aspect, by e.g. issuing appropriate signals to steering actuators of the vehicle 1 such that any one of the travelling paths T or T' is followed.

The above-mentioned methods may be implemented as one or more computer programs which are run by e.g. the control unit 10 and/or as a computer readable medium comprising instructions for causing e.g. the control unit 10 to perform any one of the methods.

The vehicles 1 in figs. 1 and 3 may be guided by use of ADAS, and/or they may be autonomously driven by use of the vehicle guiding sensors 2 and/or 3.

The control units as disclosed herein may include a microprocessor, a microcontroller, a programmable digital signal processor or another programmable device. Thus, the control unit 10 may comprise electronic circuits and connections (not shown) as well as processing circuitry (not shown) such that the control unit 10 can communicate with different parts of the vehicle 1 or with different control units of the vehicle 1, such as with various sensors, systems and control units, in particular with one or more electronic control units (ECUs) controlling electrical systems or subsystems in the vehicle 1. The control unit 10 may comprise modules in either hardware or software, or partially in hardware or software, and communicate using known transmission buses such a CAN-bus and/or wireless communication capabilities. The processing circuitry may be a general-purpose processor or a specific processor. The control unit 10 may comprise a non-transitory memory for storing computer program code and data. Thus, the skilled person realizes that the control unit 10 may be embodied by many different constructions.

It is to be understood that the present invention is not limited to the embodiments described above and illustrated in the drawings; rather, the skilled person will recognize that many changes and modifications may be made within the scope of the appended claims.

## Claims

1. A method for generating a map of an area (A) to be used for guiding a vehicle (1) in the area by use of at least one vehicle guiding sensor (2, 3), the method comprising:
- obtaining (S1) sensor accuracy data comprising information about vehicle guiding sensor accuracy problems which are associated with at least one vehicle position of a vehicle when the vehicle is guided in the area;
- based on the obtained sensor accuracy data, defining (S2) one or more low sensor accuracy zones (Z₁, Z₂, Z₃) relating to the vehicle position/s at which the vehicle guiding sensor accuracy problems were recognized; and
- generating (S3) the map based on the defined one or more low sensor accuracy zones (Z₁, Z₂, Z₃).

2. The method according to claim 1, wherein the information about vehicle guiding sensor accuracy problems are further associated with at least one of a vehicle state, an environmental condition and a time of day when the vehicle is guided in the area.

3. The method according to any one of the preceding claims, wherein the sensor accuracy data is obtained from on-board vehicle guiding sensors (2) of a plurality of vehicles which are guided in the area.

4. The method according to any one of the preceding claims, wherein the sensor accuracy data is obtained from at least one off-board vehicle guiding sensor (3).

5. The method according to any one of the preceding claims, wherein at least one of the one or more low sensor accuracy zones is defined by determining at least one entry point for the low sensor accuracy zone, which at least one entry point defines a limit between the low sensor accuracy zone and a high sensor accuracy zone (Z_{HA}) outside of the low sensor accuracy zone.

6. The method according to any one of the preceding claims, wherein the map is further generated by defining at least one high sensor accuracy zone (Z_{HA}) outside of the one or more low sensor accuracy zones.

7. The method according to any one of the preceding claims, wherein the sensor accuracy data relates to at least one of GNSS (Global Navigation Satellite System) data accuracy problems, articulation angle measurement problems and environmental perception sensor problems.

8. The method according to any one of the preceding claims, wherein the vehicle guiding sensor accuracy problems are defined by at least one predetermined threshold value.

9. A control unit (10) for generating a map of an area to be used for guiding a vehicle (1) in the area by use of at least one vehicle guiding sensor (2), wherein the control unit is configured to perform the steps of the method according to any one of the preceding claims.

10. A method for guiding a vehicle (1) in an area, comprising:
- guiding (S10) the vehicle in the area by use of a map generated according to any one of claims 1-8, and
- issuing (S20) a warning signal when the vehicle is entering or approaching at least one of the one or more low sensor accuracy zones (Z₁, Z₂, Z₃).

11. A control unit (10) for guiding a vehicle (1) in an area, wherein the control unit is configured to perform the steps of the method according to claim 10.

12. A vehicle (1), wherein the vehicle is configured to be guided by use of the control unit according to claim 11 and by at least one vehicle guiding sensor (2, 3).

13. The vehicle according to claim 12, wherein the vehicle is an articulated vehicle combination comprising at least one articulation joint.

14. A computer program comprising instructions for causing the control unit of claim 9 to perform the steps of the method according to any one of claims 1-8, and/or for causing the control unit of claim 11 to perform the steps of the method according to claim 10.

15. A computer readable medium comprising instructions for causing the control unit of claim 9 to perform the steps of the method according to any one of claims 1-8, and/or for causing the control unit of claim 11 to perform the steps of the method according to claim 10.
